# EUROPÄISCHE PATENTSCHRIFT

(11) **EP 3 907 122 B1**
(45) Veröffentlichungstag und Bekanntmachung des Hinweises auf die Patenterteilung: **08.11.2023**
(21) Anmeldenummer: 21151383.3
(22) Anmeldetag: 13.01.2021
(51) Int. Cl.: B62D 11/14, B62D 11/04, B62D 11/06

(54) **LENKSCHALTGETRIEBE FÜR KETTENFAHRZEUGE ALS PARALLELHYBRID**
STEERING TRANSMISSION FOR TRACKED VEHICLES AS PARALLEL HYBRID
BOÎTE DE VITESSES DE DIRECTION POUR VÉHICULES À CHENILLES COMME HYBRIDE PARALLÈLE

(30) Priorität: 06.02.2020 DE 102020201473
(43) Veröffentlichungstag der Anmeldung: 10.11.2021
(73) Patentinhaber: ZF Friedrichshafen AG, 88046 Friedrichshafen (DE)
(72) Erfinder: Sonnenburg, Henning, 88214 Ravensburg (DE)
(74) Vertreter: ZF Friedrichshafen AG

(56) Entgegenhaltungen:
- EP-A1- 3 378 736
- EP-B1- 3 458 294
- DE-A1-102013 204 672
- DE-A1-102015 012 929
- DE-C1- 3 636 267

## Beschreibung

Die Erfindung betrifft eine Anordnung nach dem Oberbegriff von Anspruch 1.

Herkömmliche Kettenfahrzeuge weisen ein Überlagerungslenkgetriebe auf. Dieses basiert auf zwei Planetengetrieben, die jeweils ein Kettenlaufwerk antreiben. Ein Antriebsmotor wirkt über eine starre Welle auf beide Planetengetriebe. Weiterhin sind die Planetengetriebe mit einem gegenläufigen Getriebe gekoppelt, über das ein Lenkmoment aufgebracht wird. Als Antrieb für die Lenkung dient ein Hydraulikmotor, mit dem gegenläufigen Getriebe gekoppelt ist und über eine Hydraulikpumpe von dem Antriebsmotor gespeist wird.

Die Druckschrift DE 10 2013 204 672 A1 offenbart eine Antriebsanordnung für ein Kettenfahrzeug. Zum Antrieb der Kettenlaufwerke ist jeweils ein Summiergetriebe vorgesehen. Die Antriebsanordnung umfasst drei Motoren - einen elektrischen Fahrmotor, einen elektrischen Lenkmotor und einen elektrischen Unterstützungsmotor. Zur Übertragung einer Blindleistung zwischen einem rechten Kettenlaufwerk und einem linken Kettenlaufwerk sind mechanische Antriebselemente vorgesehen. Der Unterstützungsmotor ist so schaltbar, dass er wahlweise den Fahrmotor oder den Lenkmotor unterstützen kann.

Ferner ist aus der EP 3 378 736 A1 ein Antriebssystem für Kettenfahrzeuge nach dem Oberbegriff des Anspruchs 1 bekannt. Dabei treibt ein Antriebsmotor über ein Pumpenverteilergetriebe zwei Hydraulikkreisläufe mit Hydraulikfahrpumpen und mit Hydraulikfahrmotoren an. Die Hydraulikfahrmotoren wirken auf jeweils ein Summierungsgetriebe. Die Abtriebe der Summierungsgetriebe treiben über Ketten das Kettenfahrzeug an.

Der Erfindung liegt die Aufgabe zugrunde, einen verbesserten Antriebsstrang für ein Kettenfahrzeug verfügbar zu machen. Diese Aufgabe wird gelöst durch eine Anordnung nach Anspruch 1. Bevorzugte Weiterbildungen sind in den Unteransprüchen enthalten und ergeben sich aus nachfolgender Beschreibung sowie den in den Figuren dargestellten Ausführungsbeispielen.

Die erfindungsgemäße Anordnung umfasst mindestens zwei Summiergetriebe. Diese umfassen ein erstes Summiergetriebe und ein zweites Summiergetriebe.

Ein Summiergetriebe ist ebenso wie ein Verteilergetriebe ein Getriebe mit einem Getriebefreiheitsgrad von 2.

Eine allgemeine Definition des Begriffs Getriebefreiheitsgrad, auch Getriebelaufgrad genannt, findet sich im "Dubbel" (Karl-Heinrich Grote, Jörg Feldhusen; 22. Aufl.; 2007). Der Getriebefreiheitsgrad eines Getriebes stimmt hiernach mit der Anzahl relativer Bewegungen überein, die vorgegeben werden müssen, damit die Bewegungen aller Glieder des Getriebes vollständig festgelegt sind. Dies entspricht der Anzahl relativer Bewegungen, die zu verhindern sind, um alle Glieder des Getriebes bewegungsunfähig zu machen.

Sind drei Wellen durch ein Getriebe, das einen Getriebefreiheitsgrad von 2 hat, miteinander verbunden, so sind eine erste Drehzahl einer beliebigen der drei Wellen und eine zweite Drehzahl einer beliebigen weiteren der drei Wellen frei wählbar. In Abhängigkeit der ersten Drehzahl und der zweiten Drehzahl ist die Drehzahl der verbleibenden der drei Wellen eindeutig bestimmt.

Ein Getriebe, das drei Wellen mit einem Getriebefreiheitsgrad von 2 miteinander verbindet, wird Summiergetriebe genannt, wenn es zwei an jeweils einer der Wellen anliegende Leistungen zu einer dritten, an einer dritten der Wellen anliegenden Leistung zusammenfasst. Entsprechend wird ein Getriebe, das drei Wellen mit einem Getriebefreiheitsgrad von 2 verbindet, Verteilgetriebe oder Differential genannt, wenn es eine an einer der Wellen anliegende Leistung auf die zwei übrigen Wellen verteilt. Die Begriffe Verteilergetriebe und Summiergetriebe ergeben sich aus dem bezweckten Anwendungsfall und sind je nach Anwendungsfall austauschbar.

Die Anordnung weist mindestens zwei Abtriebswellen auf. Zu den mindestens zwei Abtriebswellen gehören eine erste Abtriebswelle und eine zweite Abtriebswelle.

Bei den Abtriebswellen handelt es sich um Wellen, über die jeweils ein Abtriebsmoment bereitgestellt wird. Vorzugsweise sind die Abtriebswellen jeweils mit einem angetriebenen Rad eines Fahrzeugs drehwirksam oder drehfest verbindbar.

Darüber hinaus weist die Anordnung mindestens zwei Schaltelemente auf. Die mindestens zwei Schaltelemente umfassen ein erstes Schaltelement und ein zweites Schaltelement.

Ein Schaltelement ist ein Aktor, der durch Anlegen eines Signals von einem geöffneten Zustand in einen geschlossenen Zustand und von dem geschlossenen Zustand in den geöffneten Zustand überführt werden kann, wobei das Schaltelement im geschlossenen Zustand zwei Glieder miteinander verbindet, die relativ zueinander verdrehbar sind, wenn sich das Schaltelement im geöffneten Zustand befindet.

Bei den mindestens zwei Schaltelementen der Anordnung handelt es sich vorzugsweise um Kupplungen. Diese zeichnen sich dadurch aus, dass die beiden drehfest miteinander verbindbaren Glieder relativ zu einem drehfesten Bezugssystem, beispielsweise zu einem Gehäuse, verdrehbar sind. Dies impliziert, dass es sich bei den Gliedern um Wellen handelt.

Erfindungsgemäß umfasst die Anordnung mindestens fünf Antriebswellen und ein Verteilergetriebe. Zu den mindestens fünf Antriebswellen gehören eine erste Antriebswelle, eine zweite Antriebswelle, eine dritte Antriebswelle, eine vierte Antriebswelle und eine fünfte Antriebswelle.

Antriebswellen sind Wellen, die mit einem Antriebsdrehmoment beaufschlagbar sind.

Die erste Antriebswelle, die zweite Antriebswelle und die dritte Antriebswelle sind mittels des Verteilergetriebes miteinander verbunden. Das Verteilergetriebe verbindet also die erste Antriebswelle, die zweite Antriebswelle und die dritte Antriebswelle mit einem Getriebefreiheitsgrad von 2.

Mittels des ersten Schaltelements sind die zweite Antriebswelle und die dritte Antriebswelle drehfest miteinander verbindbar. Mittels des zweiten Schaltelements sind die vierte Antriebswelle und die fünfte Antriebswelle drehfest miteinander verbindbar.

Das erste Summiergetriebe verbindet die zweite Antriebswelle, die vierte Antriebswelle und die erste Abtriebswelle miteinander. Durch das erste Summiergetriebe sind also die zweite Antriebswelle, die vierte Antriebswelle und die erste Abtriebswelle mit einem Getriebefreiheitsgrad von 2 verbunden.

Die dritte Antriebswelle, die fünfte Antriebswelle und die zweite Abtriebswelle sind mittels des zweiten Summiergetriebes miteinander verbunden. Das zweite Summiergetriebe verbindet also die dritte Antriebswelle, die fünfte Antriebswelle und die zweite Abtriebswelle mit einem Getriebefreiheitsgrad von 2.

Ein Übersetzungsverhältnis zwischen der vierten Antriebswelle und der ersten Antriebswelle bei stehender zweiter Antriebswelle und ein Übersetzungsverhältnis zwischen der fünften Antriebswelle und der zweiten Abtriebswelle bei stehender dritter Antriebswelle haben umgekehrte Vorzeichen. Ein Übersetzungsverhältnis ist also negativ, während das andere positiv ist. Vorzugsweise sind die beiden Übersetzungsverhältnisse zudem betragsgleich.

Ein Übersetzungsverhältnis zwischen der zweiten Antriebswelle und der ersten Abtriebswelle bei stehender vierter Antriebswelle und ein Übersetzungsverhältnis zwischen der dritten Antriebswelle und der zweiten Abtriebswelle bei stehender fünfter Antriebswelle haben bevorzugt das gleiche Vorzeichen. Die Übersetzungsverhältnisse sind also entweder beide positiv oder beide negativ. Vorzugsweise gleichen sich die beiden Übersetzungsverhältnisse.

Eine stehende Welle bezeichnet eine Welle, die relativ zu dem drehfesten Bezugssystem feststehend ist, das heißt sich nicht dreht. Bei dem Bezugsobjekt kann es sich insbesondere um ein Getriebegehäuse handeln.

Die Anordnung ermöglicht die Integration von fünf Motoren. Diese umfassen einen ersten Motor, einen zweiten Motor, einen dritten Motor, einen vierten Motor und einen fünften Motor.

In einer bevorzugten Weiterbildung ist der erste Motor drehwirksam mit der ersten Antriebswelle verbunden oder verbindbar. Die drehwirksame Verbindung besteht im Einzelnen zwischen der Welle und einem Rotor bzw. einer Kurbelwelle des Motors.

Eine drehwirksame Verbindung zwischen einem Motor und einer Welle bezeichnet eine Verbindung mit einem Getriebefreiheitsgrad von 1, auch zwangsläufige Verbindung genannt. Die Verbindung kann drehfest ausgestaltet sein oder derart, dass ein linearer Drehzahlzusammenhang zwischen dem Motor und der Welle besteht.

Der zweite Motor ist drehwirksam mit der zweiten Antriebswelle verbunden oder verbindbar, der dritte Motor mit der dritten Antriebswelle, der vierte Motor mit der vierten Antriebswelle und der fünfte Motor mit der fünften Antriebswelle.

Bei dem ersten Motor handelt es sich vorzugsweise um einen Verbrennungsmotor. Der zweite Motor, der dritte Motor, der vierte Motor und der fünfte Motor sind bevorzugt als Elektromotoren ausgeführt. Dadurch ergibt sich ein Hybrid-System, das sich besonders energieeffizient betreiben lässt und zudem unabhängig vom Ladezustand elektrischer Energiespeicher ist.

Bevorzugt ist die Anordnung mit einem Getriebe weitergebildet. Über das Getriebe ist der erste Motor drehwirksam mit der ersten Antriebswelle verbunden oder verbindbar. Dies bedeutet, dass einerseits der Motor drehwirksam mit einer Eingangswelle des Getriebes und andererseits eine Ausgangswelle des Getriebes drehwirksam mit der Antriebswelle verbunden ist. Vorzugsweise bestehen zwischen dem Motor und der Eingangswelle des Getriebes sowie zwischen der Ausgangswelle des Getriebes und der ersten Antriebswelle drehfeste Verbindungen.

Bei dem Getriebe handelt es sich bevorzugt um ein Schaltgetriebe. Dieses erlaubt es, verschiedene Übersetzungen zwischen seiner Eingangswelle und seiner Ausgangswelle zu schalten.

Bevorzugt ist die Anordnung mit einem dritten Schaltelement weitergebildet. Mittels des dritten Schaltelements ist die erste Antriebswelle blockierbar. Das dritte Schaltelement erweitert die Anzahl der möglichen, mittels der Anordnung realisierbaren Antriebszustände.

Ist eine Welle mittels eines Schaltelements blockierbar, so ist die Welle blockiert, wenn sich das Schaltelement im geschlossenen Zustand befindet. Das Schaltelement stellt dann eine drehfeste Verbindung zwischen der Welle und einem drehfesten Bauteil, d.h. einem Bauteil, das bezüglich des drehfesten Bezugssystems drehfest ist, her. Entsprechend handelt es sich bei dem Schaltelement um eine Bremse.

Ein viertes und ein fünftes Schaltelement sind in einer darüber hinaus bevorzugten Weiterbildung vorgesehen, um die erste Abtriebswelle und die zweite Abtriebswelle zu blockieren. Die erste Abtriebswelle ist mittels des vierten Schaltelements blockierbar, die zweite Abtriebswelle mittels des fünften Schaltelements.

Auch durch das vierte Schaltelement und das fünfte Schaltelement vergrößert sich die Anzahl der mittels der Anordnung realisierbaren Antriebszustände. Als viertes und fünftes Schaltelement dienen bevorzugt jeweils eine Betriebs- oder Parkbremse des Fahrzeugs.

In einer bevorzugten Weitebildung sind die Abtriebswellen jeweils drehwirksam mit einem Kettenlaufwerk verbunden, sodass über die beiden Abtriebswellen jeweils ein Kettenlaufwerk angetrieben wird. Bei den angetriebenen Rädern handelt es sich also um angetriebene Räder jeweils eines Kettenlaufwerks.

Die Kettenlaufwerke sind auf gegenüberliegenden Seiten eines Kettenfahrzeugs angeordnet. Sie befinden sich also auf unterschiedlichen Seiten einer Sagittalebene des Fahrzeugs. Dies ist eine Ebene, die in Längsrichtung mittig durch das Fahrzeug verläuft und vertikal ausgerichtet ist.

Bevorzugte Ausführungsbeispiele der Erfindung sind in den Figuren dargestellt. Die Figuren stellen verschiedene Betriebszustände einer beispielhaften Anordnung dar. Übereinstimmende Bezugsziffern kennzeichnen dabei gleiche oder funktionsgleiche Merkmale. Im Einzelnen zeigen die Figuren folgende Betriebszustände:
- Fig. 1: Geradeausfahrt oder weite Kurvenfahrt mit Verbrennungsmotor;
- Fig. 2: generatorischer Betrieb im Stillstand;
- Fig. 3: Kurvenfahrt bei leerem Energiespeicher;
- Fig. 4: Wenden um eine Kette bei leerem Energiespeicher;
- Fig. 5: Wenden auf der Stelle;
- Fig. 6: schnell Wenden auf der Stelle;
- Fig. 7: Wenden auf der Stelle bei leerem Energiespeicher oder Geradeausfahrt;
- Fig. 8: Kurvenfahrt elektrisch;
- Fig. 9: Geradeausfahrt elektrisch;
- Fig. 10: langsame Kurvenfahrt elektrisch; und
- Fig. 11: elektrische Fahrt volle Kraft voraus.

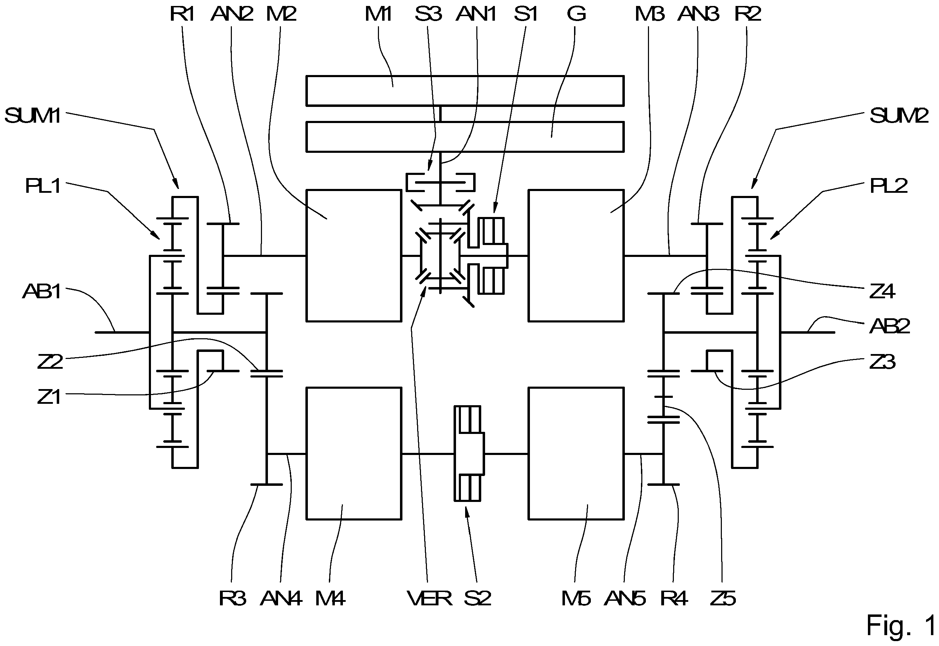

Die in den Fig. 1 bis 11 dargestellte Anordnung umfasst ein erstes Summiergetriebe SUM1, ein zweites Summiergetriebe SUM2, eine erste Abtriebswelle AB1, eine zweite Abtriebswelle AB2, ein erstes Schaltelement S1, ein zweites Schaltelement S2, ein drittes Schaltelement S3, ein viertes Schaltelement S4, ein fünftes Schaltelement S5, eine erste Antriebswelle AN1, eine zweite Antriebswelle AN2, eine dritte Antriebswelle AN3, eine vierte Antriebswelle AN4, eine fünfte Antriebswelle AN5, ein Verteilergetriebe VER, einen ersten Motor M1, einen zweiten Motor M2, einen dritten Motor M3, einen vierten Motor M4, einen fünften Motor M5 und ein Schaltgetriebe G.

Der Motor M1 ist vorzugsweise als Verbrennungsmotor ausgestaltet. Über das Schaltgetriebe G ist er mit dem Verteilergetriebe VER verbunden. Eine Ausgangswelle des Motors M1 und eine Eingangswelle des Schaltgetriebes G sind identisch. Weiterhin sind eine Ausgangswelle des Schaltgetriebes G und eine Eingangswelle des Verteilergetriebes VER identisch. Hierbei handelt es sich um die erste Antriebswelle AN1.

Die erste Antriebswelle AN1, die zweite Antriebswelle AN2 und die dritte Antriebswelle AN3 sind über das Verteilergetriebe VER miteinander verbunden.

Über das Schaltelement S1 lässt sich das Verteilergetriebe VER sperren. Dies bedeutet, dass eine drehfeste Verbindung zwischen der zweiten Antriebswelle AN2 und der dritten Antriebswelle AN3 zustande kommt, wenn das erste Schaltelement S1 geschlossen wird.

Zwischen der vierten Antriebswelle AN4 und der fünften Antriebswelle AN5 wirkt das zweite Schaltelement S2. Bei dem zweiten Schaltelement S2 handelt es sich um eine Kupplung, die ausgebildet ist, im geschlossenen Zustand die vierte Antriebswelle AN4 und die fünfte Antriebswelle AN5 drehfest miteinander zu verbinden. Ist das Schaltelement S2 geöffnet, sind die beiden Wellen AN4, AN5 relativ zueinander frei verdrehbar.

Das dritte Schaltelement S3 ist als Bremse ausgestaltet und wirkt auf die erste Antriebswelle AN1. Somit lässt sich mittels des Schaltelements S3 die erste Antriebswelle AN1 abbremsen und gehäusefest halten.

Der zweite Motor M2, der dritte Motor M3, der vierte Motor M4 und der fünfte Motor M5 sind als Elektromotoren ausgebildet. Ihr Rotor ist jeweils drehfest mit einer Antriebswelle AN2, AN3, AN4, AN5 verbunden. Im Einzelnen bestehen drehfeste Verbindungen zwischen der zweiten Antriebswelle AN2 und dem Rotor des zweiten Motors M2, zwischen der dritten Antriebswelle AN3 und dem Rotor des dritten Motors M3, zwischen der vierten Antriebswelle AN4 und dem Rotor des vierten Motors M4 sowie zwischen der fünften Antriebswelle AN5 und dem Rotor des fünften Motors M5.

Die Antriebswellen AN2, AN3, AN4, AN5 weisen jeweils ein Ritzel R1, R2, R3, R4 auf. So ist die zweite Antriebswelle AN2 drehfest mit einem ersten Ritzel R1 verbunden. Die dritte Antriebswelle AN3 ist drehfest mit einem zweiten Ritzel R2 verbunden, die vierte Antriebswelle AN4 mit einem dritten Ritzel R3 und die fünfte Antriebswelle AN5 mit einem vierten Ritzel R4.

Das erste Ritzel R1 und das dritte Ritzel R3 sind Teil des ersten Summiergetriebes SUM1. Entsprechend sind das zweite Ritzel R2 und das vierte Ritzel R4 Teil des zweiten Summiergetriebes SUM2.

Zu dem ersten Summiergetriebe SUM1 gehören darüber hinaus eine erste Planetenstufe PL1, ein erstes Zwischenrad Z1 und ein zweites Zwischenrad Z2. Entsprechend umfasst das zweite Summiergetriebe SUM2 eine zweite Planetenstufe PL2, ein drittes Zwischenrad Z3 und ein viertes Zwischenrad Z4.

Das erste Zwischenrad Z1 ist drehfest mit einem Hohlrad der ersten Planetenstufe PL1 verbunden. Es kämmt mit dem ersten Ritzel R2. Entsprechend ist das dritte Zwischenrad Z3 drehfest mit einem Hohlrad der zweiten Planetenstufe PL2 verbunden und kämmt mit dem zweiten Ritzel R2.

Das zweite Zwischenrad Z2 ist drehfest mit einem Sonnenrad der ersten Planetenstufe PL1 verbunden. Mit dem zweiten Zwischenrad Z2 kämmt das dritte Ritzel R3. Entsprechend ist das vierte Zwischenrad Z4 drehfest mit einem Sonnenrad der zweiten Planetenstufe PL2 verbunden.

Das vierte Zwischenrad Z4 kämmt aber nicht mit dem vierten Ritzel R4. Stattdessen ist zwischen dem vierten Zwischenrad Z4 und dem vierten Ritzel R4 ein fünftes Zwischenrad Z5 vorgesehen, das mit dem vierten Zwischenrad Z4 und dem vierten Ritzel R4 kämmt. Dadurch findet eine Drehrichtungsumkehr statt. Drehen sich der vierte Motor M4 und der fünfte Motor M5 in dieselbe Richtung, werden das zweite Zwischenrad Z2 und das vierte Zwischenrad Z4 gegensinnig, das heißt in unterschiedliche Richtungen angetrieben.

Die Planetenträger der beiden Planetenstufen PL1, PL2 sind drehfest mit den Abtriebswellen AB1, AB2 verbunden. Im Einzelnen ist der Planetenträger der ersten Planetenstufe PL1 drehfest mit der ersten Abtriebswelle AB1 verbunden, der Planetenträger der zweiten Planetenstufe PL2 mit der zweiten Abtriebswelle AB2. Die Abtriebswellen AB1, AB2 sind mit einem Antriebsrad jeweils eines Kettenlaufwerks drehfest verbunden.

Der in Fig. 1 dargestellte Betriebszustand entspricht einer Geradeausfahrt oder weiten Kurvenfahrt unter Nutzung des Motors M1. Das dritte Schaltelement S3 ist geöffnet und somit durchlässig für ein Antriebsmoment des Motors M1. Das Antriebsmoment wird über das Verteilergetriebe VER auf die zweite Antriebswelle AN2 und die dritte Antriebswelle AN3 aufgeteilt.

Das erste Schaltelement S1 ist geschlossen. Dadurch werden Drehzahldifferenzen zwischen der zweiten Antriebswelle AN2 und der dritten Antriebswelle AN3 vermieden.

Das zweite Element S2 ist geschlossen. Aufgrund der Drehrichtungsumkehr durch das fünfte Zwischenrad Z5 wirkt infolgedessen ein Abstützmoment zwischen dem Sonnenrad der ersten Planetenstufe PL1 und dem Sonnenrad der zweiten Planetenstufe PL2.

Die Elektromotoren M2, M3, M4, M5 laufen bei Geradeausfahrt drehmomentfrei mit. Alternativ lässt sich die Anordnung bei Geradeausfahrt hybridisch oder generatorisch betreiben. Bei hybridischem Betrieb ist mindestens einer der Elektromotoren M2, M3, M4, M5 aktiv und bringt ein Antriebsmoment auf die jeweilige Antriebswelle AN2, AN3, AN4, AN5 auf. Indem ein entgegengesetzt wirkendes Moment bzw. ein Bremsmoment aufgebracht wird, lassen sich die Elektromotoren M2, M3, M4, M5 zur Rekuperation von Energie generatorisch betreiben.

Der in Fig. 1 dargestellte Betriebszustand lässt sich auch nutzen, um Kurven mit weitem Radius zu fahren. Zum Einleiten einer Kurvenfahrt werden der vierte Motor M4 und der fünfte Motor M5 aktiviert. Die Richtung der gefahrenen Kurve ist dabei abhängig von der Drehrichtung der beiden Motoren M4, M5.

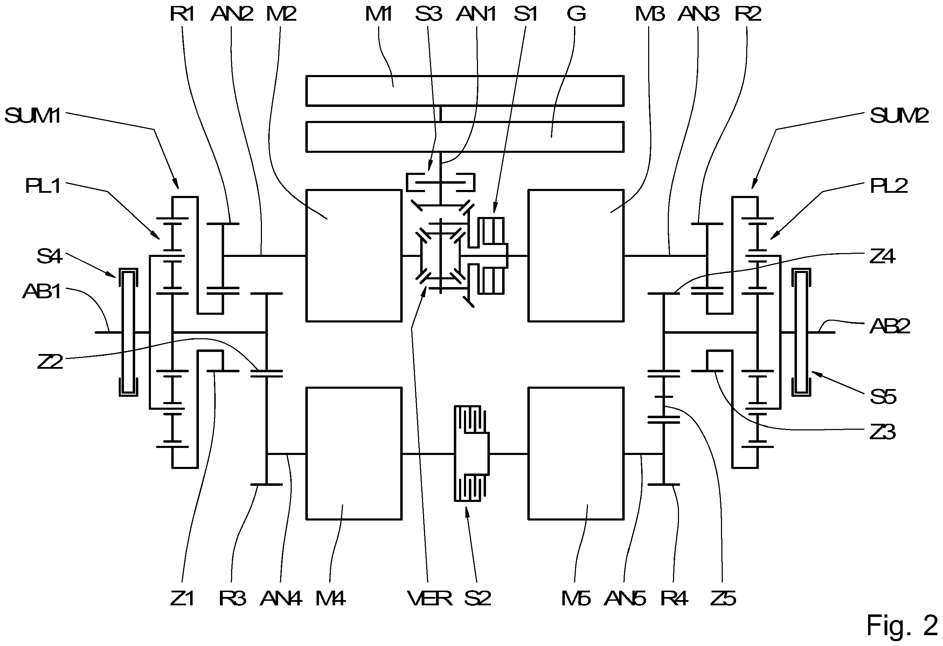

Steht das Fahrzeug still, können die Elektromotoren generatorisch betrieben werden. Ein entsprechender Betriebszustand ist in Fig. 2 dargestellt. Dieser Zustand unterscheidet sich von dem in Fig. 1 dargestellten Betriebszustand dadurch, dass ein viertes Schaltelement S4 und ein fünftes Schaltelement S5 geschlossen sind, während das zweite Schaltelement S2 geöffnet ist.

Bei dem vierten Schaltelement S4 und dem fünften Schaltelement S5 handelt es sich um eine Betriebs- und Parkbremse. Das vierte Schaltelement S4 wirkt auf die erste Abtriebswelle AB1, das fünfte Schaltelement auf die zweite Abtriebswelle AB2.

Durch die geschlossenen Schaltelemente S4, S5 wird verhindert, dass sich das Fahrzeug aufgrund des von dem Motors M1 aufgebrachten Antriebsmoments in Bewegung setzt. Das Antriebsmoment wird stattdessen genutzt, um die Elektromotoren M2, M3, M4, M5 anzutreiben. Diese wirken als Generatoren und wandeln die von dem Motor M1 eingeleitete Antriebsenergie in elektrische Energie.

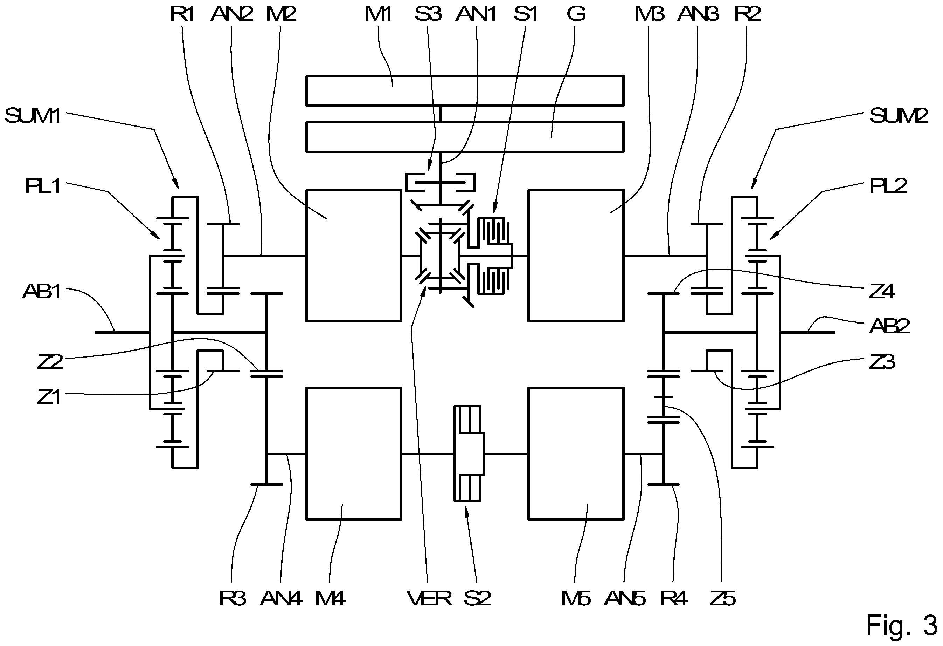

Der Betrieb der Elektromotoren M4, M5 zur Kurvenfahrt gemäß Fig. 1 setzt voraus, dass ein geladener Energiespeicher zur Verfügung steht. Ist der Energiespeicher leer oder soll dessen verbleibende Ladung anderweitig genutzt werden, lässt sich eine Kurvenfahrt durch generatorischen Betrieb der beiden anderen Elektromotoren M2, M3 realisieren. Ein entsprechender Betriebszustand ist in Fig. 3 dargestellt.

Der in Fig. 3 dargestellte Betriebszustand unterscheidet sich von dem in Fig. 1 dargestellten Betriebszustand dadurch, dass das erste Schaltelement S1 geöffnet ist. Indem wahlweise der zweite Motor M2 oder der dritte Motor M3 generatorisch betrieben werden, wirkt ein Bremsmoment auf die zweite Antriebswelle AN2 oder die dritte Antriebswelle AN3. Dadurch kommt es zwischen den beiden Antriebswellen AN2, AN3 zu Drehzahlunterschieden, die eine Kurvenfahrt bewirken.

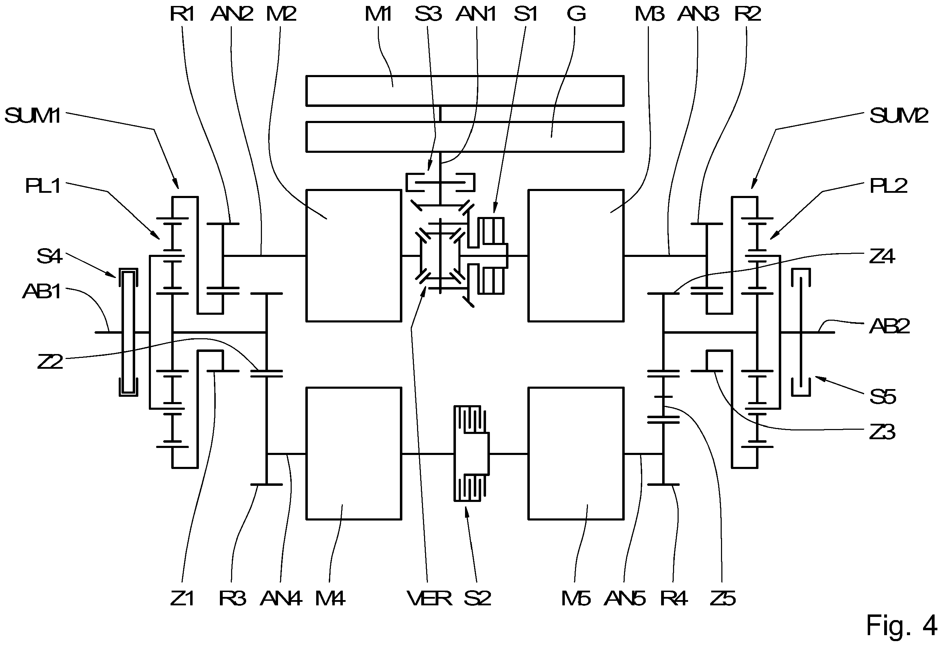

Durch Schließen eines der Schaltelemente S4, S5 lässt sich das Fahrzeug um eine Kette des entsprechenden Kettenlaufwerks wenden. Fig. 4 zeigt beispielhaft ein geschlossenes viertes Schaltelement S4. Das fünfte Schaltelement S5 ist offen. Ebenso sind das erste Schaltelement S1, das zweite Schaltelement S2 und das dritte Schaltelement S3 offen. Dadurch fließt das Antriebsmoment des Motors M1 vollständig in die zweite Abtriebswelle AB2, sodass das Fahrzeug um die Kette des Kettenlaufwerks der ersten Abtriebswelle AB1 wendet.

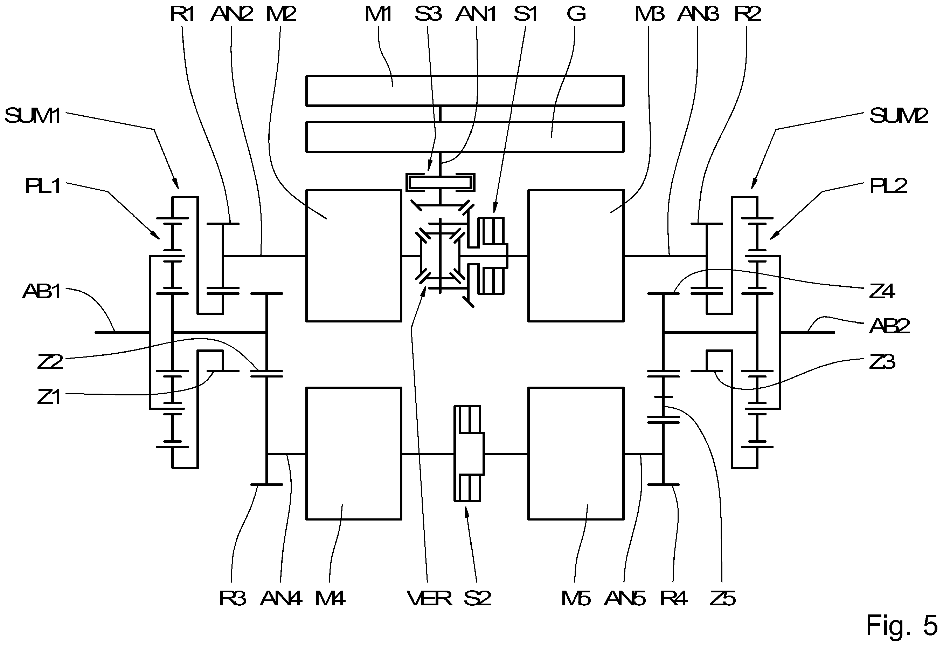

Um das Fahrzeug auf der Stelle zu wenden, werden das erste Schaltelement S1, das zweite Schaltelement S2 und das dritte Schaltelement S3 geschlossen. Dies ist in Fig. 5 dargestellt. Der Antrieb erfolgt über den vierten Motor M4 und den fünften Motor M5. Dies bewirkt eine gegensinnige Drehung der beiden Abtriebswellen AB1, AB2.

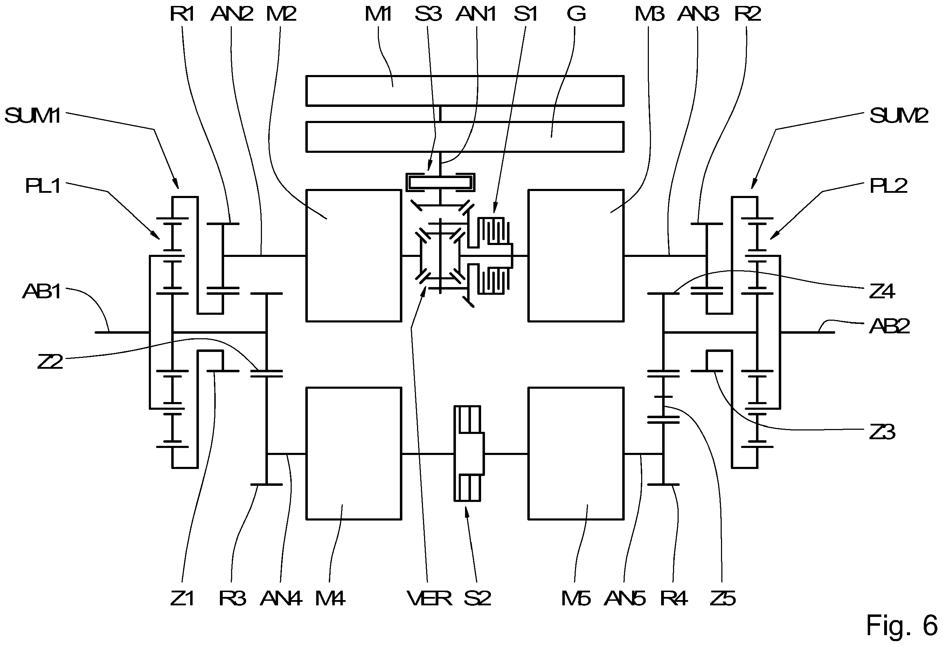

Der zweite Motor M2 und der dritte Motor M3 können zugeschaltet werden, um den Wendevorgang zu beschleunigen. Damit sich das Fahrzeug dabei nicht vorwärts oder rückwärts bewegt, müssen sich die beiden Motoren M2, M3 gegensinnig drehen. Das erste Schaltelement S1 ist dazu, wie in Fig. 6 dargestellt, geöffnet.

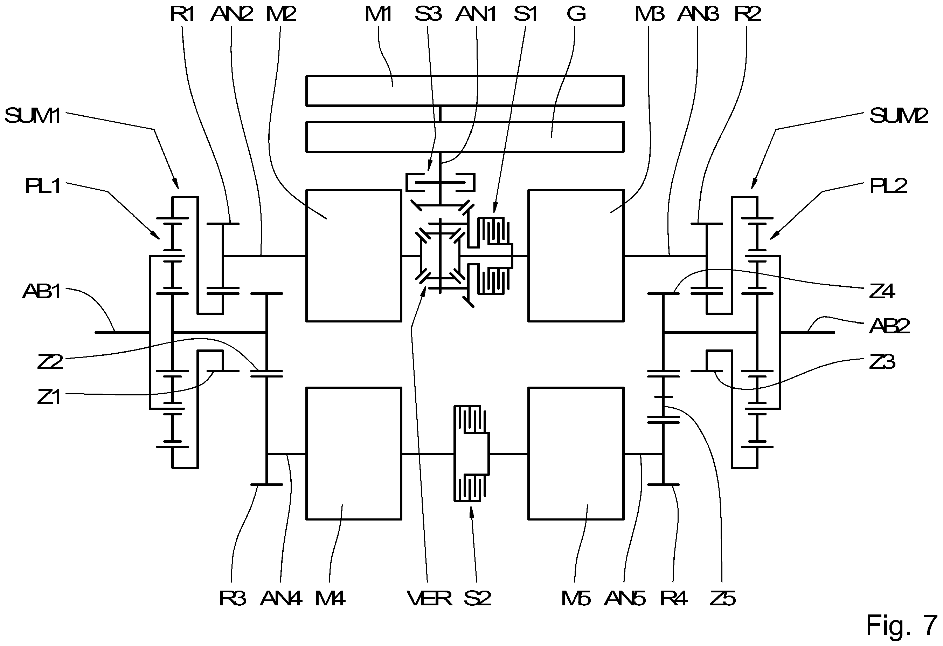

Um das Fahrzeug bei leerem Energiespeicher auf der Stelle zu wenden lässt sich der Motor M1 unterstützend zuschalten. Ein entsprechender Betriebszustand ist in Fig. 7 dargestellt. Die drei Schaltelemente S1, S2, S3 sind hier geöffnet. Der zweite Motor M2 und der dritte Motor M3 befinden sich im Generatorbetrieb.

Je nach Wenderichtung des Fahrzeugs werden der vierte Motor M4 und der fünfte Motor M5 wechselseitig generatorisch oder zum Aufbringen eines Lenkmoments betrieben. Im Einzelnen kann der vierte Motor M4 generatorisch betrieben werden, während der fünfte Motor M5 das Lenkmoment aufbringt, oder der fünfte Motor M5 wird generatorisch betrieben, während der vierte Motor M4 das Lenkmoment aufbringt.

Der in Fig. 7 dargestellte Betriebszustand lässt sich auch für eine Geradeausfahrt mit allen vier Elektromotoren M2, M3, M4, M5 nutzen. Bei abgeschaltetem Motor M1 sind dann die vier Elektromotoren M2, M3, M4, M5 als Antrieb aktiv. Dies setzt voraus, dass der Motor M1 ausgekuppelt ist und/oder das Schaltgetriebe G sich in Neutralstellung befindet

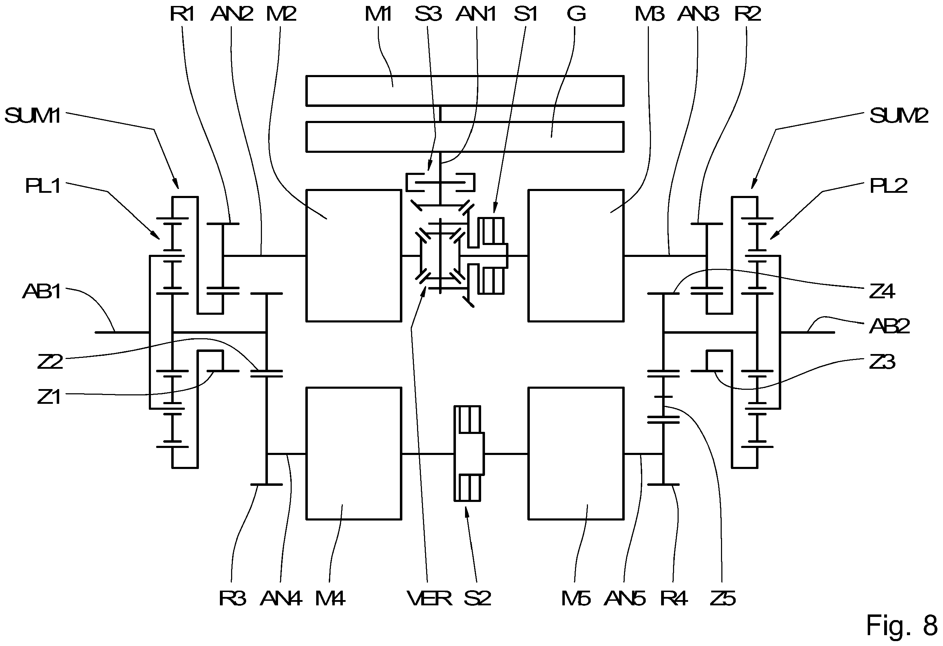

Die Fig. 8 bis 10 zeigen einen rein elektrischen Betrieb, bei dem der Motor M1 ausgeschaltet ist. Das Schaltgetriebe G befindet sich entsprechend in Neutralstellung, oder der erste Motor M1 ist ausgekuppelt, sodass zwischen dem Motor M1 und der ersten Antriebswelle AN1 kein Drehmoment übertragen wird.

Bei dem in Fig. 8 dargestellten Betriebszustand sind das erste Schaltelement S1 und das zweite Schaltelement S2 geschlossen. Das dritte Schaltelement S3 kann offen bleiben. Mittels des zweiten Motors M2 und des dritten Motors M3 wird ein Antriebsmoment aufgebracht.

Eine Aktivierung des vierten Motors M4 und des fünften Motors M5 bewirkt unterschiedliche Drehzahlen der ersten Abtriebswelle AB1 und der zweiten Abtriebswelle AB2 und entsprechend eine Kurvenfahrt. Die Richtung der Kurve ist von der Drehrichtung der beiden Motoren M4, M5 abhängig.

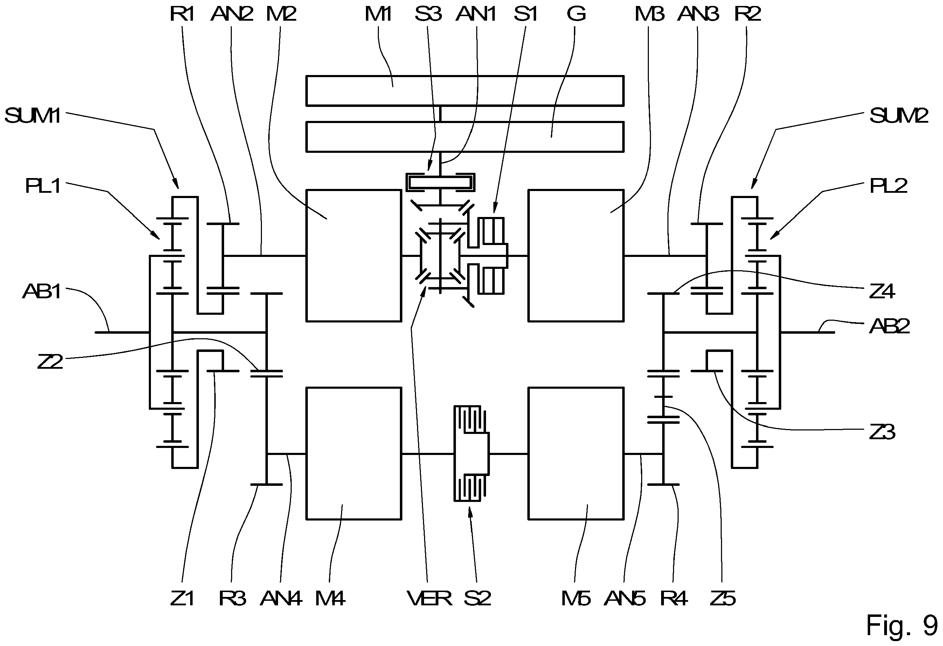

Werden das erste Schaltelement S1 und das dritte Schaltelement S3, wie in Fig. 9 dargestellt, gleichzeitig geschlossen, sind die zweite Antriebswelle AN2 und die dritte Antriebswelle AN3 blockiert. Das Fahrzeug lässt sich dann mittels des vierten Motors M4 und des fünften Motors M5 antreiben.

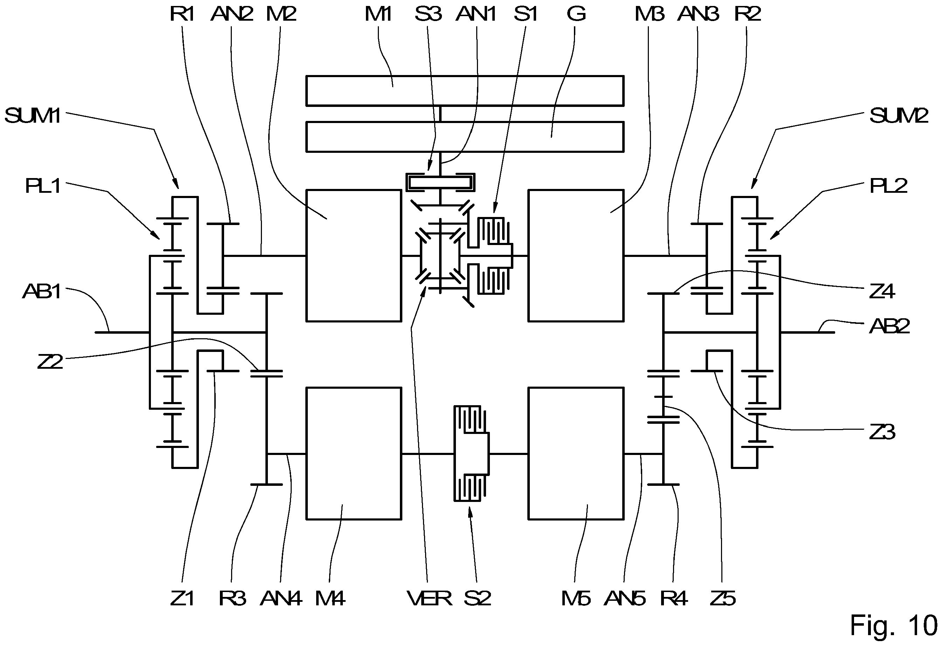

Ausgehend von dem in Fig. 9 dargestellten Betriebszustand lässt sich ein Lenkmoment aufbringen, in dem, wie in Fig. 10 dargestellt, das erste Schaltelement S1 geöffnet wird. Ein Lenkmoment lässt sich dann durch den zweiten Motor M2 und den dritten Motor M3 aufbringen.

### Bezugszeichen

- SUM1: erste Summiergetriebe
- SUM2: zweites Summiergetriebe
- AB1: erste Abtriebswelle
- AB2: zweite Abtriebswelle
- S1: erstes Schaltelement
- S2: zweites Schaltelement
- S3: drittes Schaltelement
- S4: viertes Schaltelement
- S5: fünftes Schaltelement
- AN1: erste Antriebswelle
- AN2: zweite Antriebswelle
- AN3: dritte Antriebswelle
- AN4: vierte Antriebswelle
- AN5: fünfte Antriebswelle
- VER: Verteilergetriebe
- M1: erster Motor
- M2: zweiter Motor
- M3: dritter Motor
- M4: vierer Motor
- M5: fünfter Motor
- G: Schaltgetriebe
- R1: erstes Ritzel
- R2: zweites Ritzel
- R3: drittes Ritzel
- R4: viertes Ritzel
- PL1: erste Planetenstufe
- PL2: zweite Planetenstufe
- Z1: erstes Zwischenrad
- Z2: zweites Zwischenrad
- Z3: drittes Zwischenrad
- Z4: viertes Zwischenrad
- Z5: fünftes Zwischenrad
- G: Schaltgetriebe

## Patentansprüche

1. Anordnung zum Betreiben von Kettenlaufwerken, mit mindestens zwei Summiergetrieben (SUM1, SUM2), mindestens zwei Abtriebswellen (AB1, AB2) und mindestens zwei Schaltelementen (S1, S2); wobei
mindestens fünf Antriebswellen (AN1, AN2, AN3, AN4, AN5), und mindestens ein Verteilergetriebe (VER); wobei
eine erste Antriebswelle (AN1), eine zweite Antriebswelle (AN2) und eine dritte Antriebswelle (AN3) mittels des Verteilgetriebes (VER) miteinander verbunden sind; wobei
die zweite Antriebswelle (AN2) und die dritte Antriebswelle (AN3) mittels eines ersten Schaltelements (S1) drehfest miteinander verbindbar sind; wobei eine vierte Antriebswelle (AN4) und eine fünfte Antriebswelle (AN5) mittels eines zweiten Schaltelements (S2) drehfest miteinander verbindbar sind; wobei die zweite Antriebswelle (AN2), die vierte Antriebswelle (AN4) und eine erste Abtriebswelle (AB1) mittels eines ersten Summiergetriebes (SUM1) miteinander verbunden sind; wobei
die dritte Antriebswelle (AN3), die fünfte Antriebswelle (AN5) und eine zweite Abtriebswelle (AB2) mittels eines zweiten Summiergetriebes (SUM2) miteinander verbunden sind; **dadurch gekennzeichnet, dass**
ein Übersetzungsverhältnis zwischen der vierten Antriebswelle (AN4) und der ersten Abtriebswelle (AB1) bei stehender zweiter Antriebswelle (AN2) und ein Übersetzungsverhältnis zwischen der fünften Antriebswelle (AN5) und der zweiten Abtriebswelle (AB2) bei stehender dritter Antriebswelle (AN3) umgekehrte Vorzeichen haben.

2. Anordnung nach Anspruch 1; **gekennzeichnet durch**
fünf Motoren (M1, M2, M3, M4, M5); wobei
ein erster Motor (M1) drehwirksam mit der ersten Antriebswelle (AN1) verbunden oder verbindbar ist; wobei
ein zweiter Motor (M2) drehwirksam mit der zweiten Antriebswelle (AN2) verbunden oder verbindbar ist; wobei
ein dritter Motor (M3) drehwirksam mit der dritten Antriebswelle (AN3) verbunden oder verbindbar ist; wobei
ein vierter Motor (M4) drehwirksam mit der vierten Antriebswelle (AN4) verbunden oder verbindbar ist; und wobei
ein fünfter Motor (M5) drehwirksam mit einer fünften Antriebswelle (AN5) verbunden oder verbindbar ist.

3. Anordnung nach dem vorhergehenden Anspruch; **gekennzeichnet durch** ein Getriebe (G); wobei
der erste Motor (M1) über das Getriebe (G) drehwirksam mit der ersten Antriebswelle (AN1) verbunden oder verbindbar ist.

4. Anordnung nach einem der vorhergehenden Ansprüche; **gekennzeichnet durch** ein drittes Schaltelement (S3); wobei
die erste Antriebswelle (AN1) mittels des dritten Schaltelements (S3) blockierbar ist.

5. Anordnung nach einem der vorhergehenden Ansprüche; **gekennzeichnet durch** ein viertes Schaltelement (S4) und ein fünftes Schaltelement (S5); wobei die erste Abtriebswelle (AB1) mittels des vierten Schaltelements (S4) blockierbar ist; und wobei
die zweite Abtriebswelle (AB2) mittels des fünften Schaltelements (S5) blockierbar ist.

6. Anordnung nach einem der vorhergehenden Ansprüche; **gekennzeichnet durch** ein erstes Kettenlaufwerk und ein zweites Ketten laufwerk; wobei die erste Abtriebswelle (AB1) drehwirksam mit dem ersten Kettenlaufwerk verbunden ist; und wobei
die zweite Abtriebswelle (AB2) drehwirksam mit dem zweiten Kettenlaufwerk verbunden ist.

## Claims

1. Arrangement for operating crawler tracks, having at least two summing gearboxes (SUM1, SUM2), at least two output shafts (AB1, AB2) and at least two switching elements (S1, S2); wherein
at least five drive shafts (AN1, AN2, AN3, AN4, AN5) and at least one transfer case (VER); wherein
a first drive shaft (AN1), a second drive shaft (AN2) and a third drive shaft (AN3) are connected to each other by means of the transfer case (VER); wherein
the second drive shaft (AN2) and the third drive shaft (AN3) can be co-rotationally connected to one another by means of a first switching element (S1); wherein
a fourth drive shaft (AN4) and a fifth drive shaft (AN5) can be co-rotationally connected to one another by means of a second switching element (S2); wherein
the second drive shaft (AN2), the fourth drive shaft (AN4) and a first output shaft (AB1) are connected to one another by means of a first summing gearbox (SUM1); wherein
the third drive shaft (AN3), the fifth drive shaft (AN5) and a second output shaft (AB2) are connected to one another by means of a second summing gearbox (SUM2); **characterized in that**
a transmission ratio between the fourth drive shaft (AN4) and the first output shaft (AB1) when the second drive shaft (AN2) is stationary and a transmission ratio between the fifth drive shaft (AN5) and the second output shaft (AB2) when the third drive shaft (AN3) is stationary have opposite signs.

2. Arrangement according to Claim 1, **characterized by** five motors (M1, M2, M3, M4, M5); wherein
a first motor (M1) is or can be rotationally connected to the first drive shaft (AN1); wherein
a second motor (M2) is or can be rotationally connected to the second drive shaft (AN2); wherein
a third motor (M3) is or can be rotationally connected to the third drive shaft (AN3); wherein
a fourth motor (M4) is or can be rotationally connected to the fourth drive shaft (AN4); and wherein
a fifth motor (M5) is or can be rotationally connected to a fifth drive shaft (AN5).

3. Arrangement according to the preceding claim, **characterized by**
a gearbox (G); wherein
the first motor (M1) is or can be rotationally connected to the first drive shaft (AN1) via the gearbox (G).

4. Arrangement according to one of the preceding claims, **characterized by**
a third switching element (S3); wherein
the first drive shaft (AN1) can be blocked by means of the third switching element (S3).

5. Arrangement according to one of the preceding claims, **characterized by**
a fourth switching element (S4) and a fifth switching element (S5); wherein
the first output shaft (AB1) can be blocked by means of the fourth switching element (S4); and wherein
the second output shaft (AB2) can be blocked by means of the fifth switching element (S5).

6. Arrangement according to one of the preceding claims, **characterized by**
a first crawler track and a second crawler track; wherein the first output shaft (AB1) is rotationally connected to the first crawler track; and wherein
the second output shaft (AB2) is rotationally connected to the second crawler track.

## Revendications

1. Arrangement pour faire fonctionner des mécanismes de roulement à chaînes, comprenant au moins deux transmissions totalisatrices (SUM1, SUM2), au moins deux arbres de sortie (AB1, AB2) et au moins deux éléments de commutation (S1, S2) ;
au moins cinq arbres d'entraînement (AN1, AN2, AN3, AN4, AN5) et au moins une boîte de transfert (VER) ;
un premier arbre d'entraînement (AN1), un deuxième arbre d'entraînement (AN2) et un troisième arbre d'entraînement (AN3) étant reliés entre eux par le biais de la boîte de transfert (VER) ;
le deuxième arbre d'entraînement (AN2) et le troisième arbre d'entraînement (AN3) pouvant être reliés entre eux en rotation solidaire au moyen d'un premier élément de commutation (S1) ;
un quatrième arbre d'entraînement (AN4) et un cinquième arbre d'entraînement (AN5) pouvant être reliés entre eux en rotation solidaire au moyen d'un deuxième élément de commutation (S2) ;
le deuxième arbre d'entraînement (AN2), le quatrième arbre d'entraînement (AN4) et un premier arbre de sortie (AB1) étant reliés entre eux par le biais d'une première transmission totalisatrice (SUM1) ;
le troisième arbre d'entraînement (AN3), le cinquième arbre d'entraînement (AN5) et un deuxième arbre de sortie (AB2) étant reliés entre eux par le biais d'une deuxième transmission totalisatrice (SUM2) ; **caractérisé en ce que** un rapport de démultiplication entre le quatrième arbre d'entraînement (AN4) et le premier arbre de sortie (AB1) lorsque le deuxième arbre d'entraînement (AN2) est immobile et un rapport de démultiplication entre le cinquième arbre d'entraînement (AN5) et le deuxième arbre de sortie (AB2) lorsque le troisième arbre d'entraînement (AN3) est immobile ont des signes opposés.

2. Arrangement selon la revendication 1, **caractérisé par**
cinq moteurs (M1, M2, M3, M4, M5) ;
un premier moteur (M1) étant relié ou pouvant être relié avec effet de rotation avec le premier arbre d'entraînement (AN1) ;
un deuxième moteur (M2) étant relié ou pouvant être relié avec effet de rotation avec le deuxième arbre d'entraînement (AN2) ;
un troisième moteur (M3) étant relié ou pouvant être relié avec effet de rotation avec le troisième arbre d'entraînement (AN3) ;
un quatrième moteur (M4) étant relié ou pouvant être relié avec effet de rotation avec le quatrième arbre d'entraînement (AN4) ; et
un cinquième moteur (M5) étant relié ou pouvant être relié avec effet de rotation avec le cinquième arbre d'entraînement (AN5).

3. Arrangement selon la revendication précédente, **caractérisé par** un engrenage (G) ;
le premier moteur (M1) étant relié ou pouvant être relié avec effet de rotation avec le premier arbre d'entraînement (AN1) par le biais de l'engrenage (G).

4. Arrangement selon l'une des revendications précédentes, **caractérisé par** un troisième élément de commutation (S3) ;
le premier arbre d'entraînement (AN1) pouvant être bloqué au moyen du troisième élément de commutation (S3).

5. Arrangement selon l'une des revendications précédentes, **caractérisé par** un quatrième élément de commutation (S4) et un cinquième élément de commutation (S5) ;
le premier arbre de sortie (AB1) pouvant être bloqué au moyen du quatrième élément de commutation (S4) ; et
le deuxième arbre de sortie (AB2) pouvant être bloqué au moyen du cinquième élément de commutation (S5).

6. Arrangement selon l'une des revendications précédentes, **caractérisé par** un premier mécanisme de roulement à chaînes et un deuxième mécanisme de roulement à chaînes ;
le premier arbre de sortie (AB1) étant relié avec effet de rotation avec le premier mécanisme de roulement à chaînes ; et
le deuxième arbre de sortie (AB2) étant relié avec effet de rotation avec le deuxième mécanisme de roulement à chaînes.
